(19) **Europäisches Patentamt**
**European Patent Office**
**Office européen des brevets**

(11) **EP 3 964 542 B1**

(12) **EUROPEAN PATENT SPECIFICATION**

(45) Date of publication and mention
of the grant of the patent:
**16.11.2022 Bulletin 2022/46**

(21) Application number: **20194159.8**

(22) Date of filing: **02.09.2020**

(51) International Patent Classification (IPC):
***C08J 11/02*** *(2006.01)* ***C08F 6/28*** *(2006.01)*
***C08L 23/02*** *(2006.01)*

(52) Cooperative Patent Classification (CPC):
**C08J 11/02;** C08J 2323/02

(54) **REMOVAL OF ODORANTS FROM POST-CONSUMER POLYOLEFIN WASTE**

ENTFERNUNG VON RIECHSTOFFEN AUS NACHVERBRAUCHER-POLYOLEFINABFÄLLEN

ÉLIMINATION DES SUBSTANCES ODORANTES DES DÉCHETS DE POLYOLÉFINE
POST-CONSOMMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2022 Bulletin 2022/10**

(73) Proprietor: **Borealis AG**
**1020 Vienna (AT)**

(72) Inventors:
• **Denifl, Peter**
**4021 Linz (AT)**
• **Piettre, Kilian**
**4021 Linz (AT)**

• **Fuchs, Andreas**
**4021 Linz (AT)**
• **Kaltenbrunner, Theresa**
**4021 Linz (AT)**
• **Pan, Cheng**
**4021 Linz (AT)**
• **Jones, Simon**
**69207 Sandhausen (DE)**

(74) Representative: **Maiwald Patent- und
Rechtsanwaltsgesellschaft mbH
Elisenhof
Elisenstraße 3
80335 München (DE)**

(56) References cited:
**WO-A1-97/16478 JP-A- S60 231 726**

**Description**

The present invention relates to a process for reducing the hydrophobic functional group-containing volatile organic compound content and hydrophilic volatile organic compound content of recycled polyolefin, as well as the use of said process.

**Background to the Invention**

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30 %), there is still a great potential for intelligent reuse of plastic waste streams and for mechanical recycling of plastic wastes.

Taking the automobile industry as an example. In Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved. This invention particularly focuses on mechanically recycled waste streams as opposed to "energetic recycling" where polyolefins are burnt and used for energy. However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE); this is especially true for post-consumer waste streams. Commercial recyclates from post-consumer waste sources have been found generally to contain mixtures of PP and PE, the minor component reaching up to < 50 wt.-%.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, polystyrene or non-polymeric substances like wood, paper, glass or aluminium. In addition, recycled polypropylene rich materials normally have properties, which are much worse than those of the virgin materials, unless the amount of recycled polyolefin added to the final compound is extremely low. For example, such materials often have poor performance in odour and taste, limited stiffness, limited impact strength and poor mechanical properties (such as e.g. brittleness) thus, they do not fulfil customer requirements.

The poor mechanical properties can be improved through blending the recycled polyolefin with virgin polymers, or through the use of reinforcing fillers, however this does not address the issue of odour/taste.

The established method for removing volatile organic compounds from both virgin polymers and from recycled polymers involves aeration of the polymers. This may be achieved, inter alia, through the use of air, inert gases or steam.

Variants on this process have been known for many years, and are described, inter alia, in EP 0 004 601 A1, EP 0 859 809 A1, EP 0 964 877 A1, EP 1 542 777 A2, and EP 3 647 328 A1.

Whilst these methods can be very efficient at removing a broad range of volatile compounds, they can be energy intensive, which can be counterproductive when aiming for a recycling process that is as environmentally friendly as possible.

As such, there remains a need for further methods of reducing odorous, volatile compounds from recycled polyolefin compositions.

Document JP S60 231726 refers to a method of treating a polyolefin with a gas or its mixture with steam in a specified temperature range for removing residual odors. Document WO 97/16478 relates to a process of contacting post-consumer polyolefin chips containing volatile impurities with a heated gas at a superficial velocity sufficient to substantially reduce the volatile impurities.

The present invention is based upon the finding that treatment of recycled polyolefin with an inorganic oxoacid, followed by the treatment of the recycled polyolefin with either water or a caustic (i.e. base-containing) solution, the removal of both hydrophilic volatile organic compounds, such as acetic acid and acetaldehyde, and hydrophobic functional group-containing volatile organic compounds, such as styrene and limonene, can be achieved.

## Summary of the Invention

The present invention is directed to a process for reducing the hydrophobic functional group-containing volatile organic compound content and hydrophilic volatile organic compound content of recycled polyolefin comprising, in the given order, the steps of:

(a) treating recycled polyolefin, which contains hydrophobic functional group-containing volatile organic compounds and hydrophilic volatile organic compounds, with an aqueous solution A of an inorganic oxoacid, wherein said aqueous solution A has a pH-value of 2.0 or lower,
(b) removing aqueous solution A of step (a) from the recycled polyolefin,
(c) treating the recycled polyolefin of step (b) with an aqueous solution B having a pH-value of 7.0 or higher,
(d) removing aqueous solution B of step (c) from the recycled polyolefin,
(e) optionally drying, extruding and/or aerating the recycled polyolefin,

thereby obtaining a recycled polyolefin with reduced content of hydrophobic functional group-containing volatile organic compounds and hydrophilic volatile organic compounds, wherein volatile organic compounds are defined as organic compounds having an initial boiling point (b.p.) of less than or equal to 250 °C when measured at a standard atmospheric pressure of 101.3 kPa,
hydrophobic compounds are defined as those compounds having a logP (octanol/water) value of greater than 1.0, and hydrophilic compounds are defined as those compounds having a logP (octanol/water) value of less than or equal to 1.0.

The invention is further directed to a use of the process of the invention for the reduction of the content of hydrophobic functional group-containing volatile organic compounds and hydrophilic volatile organic compounds, wherein the limonene content, as measured by HS-GC/MS, decreases to less than 30% of the value measured before the process, and/or wherein the styrene content, as measured by HS-GC/MS, decreases to less than 30% of the value measured before the process

## Definitions

In the context of the present invention, the term "volatile organic compound" refers to any organic compound having an initial boiling point of less than or equal to 250 °C, which is the definition set out by the European Union in the VOC Solvents Emissions Directive 1999/13/EC.

The term "hydrophilic", in the present invention is taken to mean having a partition function between octanol and water (logP (octanol/water)) of less than or equal to 1.0.

The term "hydrophobic", in the present invention is taken to mean having a partition function between octanol and water (logP (octanol/water)) of greater than 1.0.

The term "functional group-containing" means that the compound must contain atoms other than just carbon and hydrogen and/or must contain double or triple bonds, or aromatic systems. Suitable examples of functional groups include hydroxyl groups, amino groups, carbonyl groups (either aldehyde or ketone), alkenes (olefins), alkynes, phenyl rings etc.

In the context of the present invention, the term "acid" refers to compounds that act as proton donors in aqueous solutions, i.e. Bronsted acids. The acid may be monoprotic of multiprotic. In the following, the "pKa" (logarithmic acid dissociation constant) refers to the first dissociation step of the acid.

"Inorganic oxoacids" are any compounds wherein an acidic hydrogen is bound to an oxygen atom, wherein the acid does not contain a hydrocarbon chain or ring structure (i.e. organic moiety). These inorganic oxoacids typically, though not strictly always, have a formula of type $H_mXO_n$, where X is an atom functioning as a *central atom,* whereas parameters *m* and *n* depend on the oxidation state of the element X. In most cases, the element X is a nonmetal, but some metals, for example chromium and manganese, can form oxoacids when occurring at their highest oxidation states. Due to the generally high oxidation state of the central atom X, the conjugate base of such oxoacids may act as an oxidant.

The person skilled in the art would be aware that pH values of greater than 14.0 and lower than 0.0 are theoretically possible; however, they would also be aware that the determination of such pH values is incredibly difficult using conventional pH probes. As such, in the context of this invention, aqueous solutions having an effective pH of greater than 14.0 are considered to have a pH of 14.0 and aqueous solutions having an effective pH of lower than 0.0 are considered to have a pH of 0.0.

In the context of the present invention, the term "rinse" is used to indicate the addition of a solvent, typically water, which is used to remove foreign material or remaining liquid from the surface of the polyolefin. This can be achieved in very short times, i.e. less than 5 minutes, often less than 1 minute, in contrast to "washing" steps that typically require a longer time, and agitation, to extract volatile organic compounds from the polyolefin.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

**Detailed Description of the Invention**

Process

The process for reducing the hydrophobic functional group-containing volatile organic compound content and hydrophilic volatile organic compound content of recycled polyolefin comprises, in the given order, the steps of:

(a) treating recycled polyolefin, which contains hydrophobic functional group-containing volatile organic compounds and hydrophilic volatile organic compounds, with an aqueous solution A of an inorganic oxoacid, wherein said aqueous solution A has a pH-value of 2.0 or lower,
(b) removing aqueous solution A of step (a) from the recycled polyolefin,
(c) treating the recycled polyolefin of step (b) with an aqueous solution B having a pH-value of 7.0 or higher,
(d) removing aqueous solution B of step (c) from the recycled polyolefin,
(e) optionally drying, extruding and/or aerating the recycled polyolefin,

thereby obtaining a recycled polyolefin with reduced content of hydrophobic functional group-containing volatile organic compounds and hydrophilic volatile organic compounds, wherein volatile organic compounds are defined as organic compounds having an initial boiling point (b.p.) of less than or equal to 250 °C when measured at a standard atmospheric pressure of 101.3 kPa,
hydrophobic compounds are defined as those compounds having a logP (octanol/water) value of greater than 1.0, and hydrophilic compounds are defined as those compounds having a logP (octanol/water) value of less than or equal to 1.0.

In an alternative embodiment, the process for reducing the hydrophobic functional group-containing volatile organic compound content and hydrophilic volatile organic compound content of recycled polyolefin comprises, in the given order, the steps of:

(a) treating recycled polyolefin, which contains hydrophobic functional group-containing volatile organic compounds and hydrophilic volatile organic compounds, with an aqueous solution A of an inorganic oxoacid, wherein said aqueous solution A has a pH-value in the range from 0.0 to 2.0,
(b) removing aqueous solution A of step (a) from the recycled polyolefin,
(c) treating the recycled polyolefin of step (b) with an aqueous solution B having a pH-value in the range from 7.0 to 14.0,
(d) removing aqueous solution B of step (c) from the recycled polyolefin,
(e) optionally drying, extruding and/or aerating the recycled polyolefin,

thereby obtaining a recycled polyolefin with reduced content of hydrophobic functional group-containing volatile organic compounds and hydrophilic volatile organic compounds, wherein volatile organic compounds are defined as organic compounds having an initial boiling point (b.p.) of less than or equal to 250 °C when measured at a standard atmospheric pressure of 101.3 kPa,
hydrophobic compounds are defined as those compounds having a logP (octanol/water) value of greater than 1.0, and hydrophilic compounds are defined as those compounds having a logP (octanol/water) value of less than or equal to 1.0.

The recycled polyolefin must contain hydrophobic functional group-containing volatile organic compounds and hydrophilic volatile organic compounds. These compounds typically result from contamination during the first use of the polymer, often when the polymer is used as packaging material, especially for food and/or personal care compositions.

It is further preferred that the hydrophobic functional group-containing volatile organic compounds of the present invention contain a covalent bond selected from O-H bonds, C=O bonds and C=C bonds.

The recycled polyolefin preferably originates from post-consumer waste, post-industrial waste or a combination thereof, most preferably from post-consumer waste.

Post-consumer waste refers to objects having completed at least a first use cycle (or life cycle), i.e. having already served their first purpose; while industrial waste refers to manufacturing scrap, which does not normally reach a consumer.

The recycled polyolefin is preferably provided in a flaked form or pelletized form.

Whilst the process according to the present invention is effective at removing hydrophobic functional group-containing volatile organic compounds and hydrophilic volatile organic compounds from recycled polyolefin in flaked or pelletized form, it is preferred that the recycled polyolefin is shredded prior to the treatment with aqueous solution A of the inorganic oxoacid. This has been found to improve the extraction of the hydrophobic functional group-containing volatile organic compounds and hydrophilic volatile organic compounds both as a result of higher effective surface areas and also improved ease of agitation, should agitation be required.

It is further preferred that the combination of aqueous solution A and the recycled polyolefin in step (a) is subjected to agitation through mechanical mixing, ultrasonic treatment, mechanical grinding or pump around loop. This agitation helps to expose the surface of the recycled polyolefin to fresh aqueous solution A, avoiding that a high concentration of extracted volatile organic compounds at the interface would hinder further extraction.

It is also preferred that the combination of aqueous solution B and the recycled polyolefin in step (c) is subjected to agitation through mechanical mixing, ultrasonic treatment, mechanical grinding or pump around loop, for the same reasons as given above.

Steps (b) and (d) involve the removal of aqueous solution A and aqueous solution B, respectively, from the recycled polyolefin. Whilst this process is relatively simple to achieve through decanting and/or filtering the mixture, traces of either aqueous solution A or aqueous solution B can remain on the surface of the recycled polyolefin. These traces of aqueous solution A and/or B contain solubilised volatile organic compounds, as well as the acid and/or base if present, and it is therefore advantageous to remove all trace of the aqueous solutions A and/or B.

This may be achieved through the use of rinsing steps, whereby any foreign material and/or aqueous solutions are rinsed from the surface of the recycled polyolefin.

As such, it is preferred that the process comprises an additional step (b2) of rinsing residue of the aqueous solution (A) and/or any other foreign material and/or degradation products thereof from the recycled polyolefin, which is carried out after step (b).

It is further preferred that the process comprises an additional step (d2) of rinsing residue of the aqueous solution (B) and/or any other foreign material and/or degradation products thereof from the recycled polyolefin, which is carried out after step (d).

Step (a) itself involves the treatment of the recycled polyolefin with an aqueous solution A of an inorganic oxoacid. Without wishing to be bound by theory, it is believed that this inorganic oxoacid decomposes/reacts with the functional group-containing hydrophobic volatile organic compounds, such as styrene and limonene, present in the recycled polyolefin, converting them into more hydrophilic and/or more volatile compounds, enabling them to be extracted into the aqueous solution A.

In order to achieve this hypothesized oxidation/acidic degradation, the acid must be an inorganic oxoacid, since the counteranions of such acids can act as oxidants.

It is preferred that the inorganic oxoacid is selected from the group consisting of disulphuric acid, sulphuric acid, phosphoric acid, nitric acid, perchloric acid, and mixtures thereof.

In a particularly preferred embodiment, the inorganic oxoacid is sulphuric acid.

It is preferred that the pKa of the inorganic oxoacid is in the range from -5.0 to 5.0, preferably in the range from -5.0 to 0.0.

It is additionally preferred that the amount of the inorganic oxoacid in aqueous solution A is in the range of 40 to 100 wt.-% (corresponding for sulphuric acid to a molarity of 5.3 to 18.65 M), more preferably in the range from 70 to 98 wt.-% (corresponds to 11.5 M to 18.4 M, most preferably from 94 to 98 wt.-% (corresponds to 17.8 M to 18.4 M).

The aqueous solution A may comprise more than one inorganic oxoacid. The above mentioned concentration and pKa values refer to each individual acid.

It is particularly preferred that aqueous solution A is an aqueous solution of sulphuric acid at a concentration in the range from 94 to 98 wt.-%.

The pH of aqueous solution A must be less than 2.0, more preferably less than 1.0, most preferably less than 0.5.

Alternatively, the pH must be in the range from 0.0 to 2.0, more preferably in the range from 0.0 to 1.0, most preferably in the range from 0.0 to 0.5.

The treatment of the recycled polyolefin with the aqueous solution A in step (a) is a washing step, as opposed to a rinsing step as defined herein, and consequently typically lasts 5 minutes or longer, like 5 minutes to 24 hours.

The treatment of the recycled polyolefin with the aqueous solution A in step (a) preferably lasts 5 minutes to 4 hours, preferably 30 minutes to 3 hours, most preferably 1 to 2 hours.

It is further preferred that step (a) is carried out at a temperature in the range from 10 to 45 °C, more preferably in the range from 20 to 35 °C.

Whilst step (a) may be effective for the removal of some hydrophilic volatile organic compounds, the highly acidic nature of aqueous solution A may make the extraction of many hydrophilic compounds, especially acidic examples, less effective than would be the case for a simple water wash.

As such, treatment of the recycled polyolefin that results from step (b) with an aqueous solution B in step (c) is used to remove any remaining hydrophilic volatile organic compounds.

Treatment with water may be used to remove the hydrophilic volatile organic compounds, however improved results can be obtained when aqueous solution B contains a base, i.e. aqueous solution B is a caustic aqueous solution comprising a base.

It is preferred that the caustic aqueous solution comprises a base in an amount in the range from 0.5 to 10 wt.-%, more preferably 1 to 5 wt.-%.

The choice of base is not crucial, however it is preferred that the base is selected from the group consisting of calcium hydroxide, potassium hydroxide, magnesium hydroxide, lithium hydroxide, sodium bicarbonate, sodium hydroxide and mixtures thereof.

It is particularly preferred that the base is sodium hydroxide.

In one particularly preferred embodiment, aqueous solution B is a sodium hydroxide solution having a sodium hydroxide concentration in the range from 3 to 10 wt.-%.

The presence of a base means that the pH of aqueous solution B is increased above 7.0.

It is preferred that the pH of the caustic aqueous solution is in the range greater than or equal to 9.0, more preferably greater than or equal to 11.0, most preferably greater than or equal to 12.0.

It is alternatively preferred that the pH of the caustic aqueous solution is in the range of 9.0 to 14.0, more preferably in the range from 11.0 to 14.0, most preferably in the range from 12.0 to 14.0.

The treatment of the recycled polyolefin with the aqueous solution B in step (c) is a washing step, as opposed to a rinsing step as defined herein, and consequently typically lasts 5 minutes or longer, like 5 minutes to 24 hours.

The treatment of the recycled polyolefin with the aqueous solution B in step (c) preferably lasts 5 minutes to 4 hours, preferably 30 minutes to 3 hours, most preferably 1 to 2 hours.

It is further preferred that step (a) is carried out at a temperature in the range from 20 to 90 °C, more preferably in the range from 50 to 80 °C.

In a particularly preferred embodiment, aqueous solution A is an aqueous solution of sulphuric acid at a concentration in the range from 94 to 98 wt.-% and aqueous solution B is a sodium hydroxide solution having a sodium hydroxide concentration in the range from 3 to 10 wt.-%.

The process as described above results in the reduction of hydrophobic functional group-containing volatile organic compound content and hydrophilic volatile organic compound content of the recycled polyolefin.

It is particularly preferred that the recycled polyolefin obtained as a product of the process has a limonene content, as measured by HS-GC/MS, of less than 30% of the value measured before the process.

It is further preferred that the recycled polyolefin obtained as a product of the process has a styrene content, as measured by HS-GC/MS, of less than 30% of the value measured before the process.

It is additionally preferred that the recycled polyolefin obtained as a product of the process has an acetic acid content, as measured by HS-GC/MS, of less than 40% of the value measured before the process.

It is furthermore preferred that the recycled polyolefin obtained as a product of the process has an acetaldehyde content, as measured by HS-GC/MS, of less than 20% of the value measured before the process.

In a particularly preferred embodiment, the recycled polyolefin obtained as a product of the process has a limonene content, as measured by HS-GC/MS, of less than 30% of the value measured before the process, a styrene content, as measured by HS-GC/MS, of less than 30% of the value measured before the process, an acetic acid content, as measured by HS-GC/MS, of less than 40% of the value measured before the process, and an acetaldehyde content, as measured by HS-GC/MS, of less than 20% of the value measured before the process.

Use

The present invention is also directed to a use of the process as described above. All preferable features and preferred embodiments apply equally to the use of the process, as to the process itself.

In one embodiment, the process can be used for the reduction of the content of hydrophobic functional group-containing volatile organic compounds and hydrophilic volatile organic compounds in recycled polyolefin, wherein the limonene content, as measured by HS-GC/MS, decreases to less than 30% of the value measured before the process.

In an alternative embodiment, the process can be used for the reduction of the content of hydrophobic functional group-containing volatile organic compounds and hydrophilic volatile organic compounds in recycled polyolefin, wherein the styrene content, as measured by HS-GC/MS, decreases to less than 30% of the value measured before the process.

In a preferred embodiment the process can be used for the reduction of the content of hydrophobic functional group-containing volatile organic compounds and hydrophilic volatile organic compounds in recycled polyolefin, wherein the limonene content, as measured by HS-GC/MS, decreases to less than 30% of the value measured before the process and wherein the styrene content, as measured by HS-GC/MS, decreases to less than 30% of the value measured before the process.

In each of these embodiments, it is preferred that the acetic acid content, as measured by HS-GC/MS, decreases to less than 40% of the value measured before the process.

It is equally preferred that the acetaldehyde content, as measured by HS-GC/MS, decreases to less than 20% of the value measured before the process.

It is particularly preferred that the acetic acid content, as measured by HS-GC/MS, decreases to less than 40% of the value measured before the process and that the acetaldehyde content, as measured by HS-GC/MS, decreases to less than 20% of the value measured before the process.

In a yet further preferred embodiment, the process can be used for the reduction of the content of hydrophobic functional group-containing volatile organic compounds and hydrophilic volatile organic compounds in recycled polyolefin, wherein the limonene content, as measured by HS-GC/MS, decreases to less than 30% of the value measured before the process, the styrene content, as measured by HS-GC/MS, decreases to less than 30% of the value measured before the process, the acetic acid content, as measured by HS-GC/MS, decreases to less than 40% of the value measured before the process and the acetaldehyde content, as measured by HS-GC/MS, decreases to less than 20% of the value measured before the process.

### EXAMPLES

#### 1. Definitions/Determination Methods:

#### Determination of acetic acid, styrene and limonene content via HS-GC/MS

#### Static headspace analysis for marker substance determination

The parameters of the applied headspace gas chromatography mass spectrometry (HS/GC/MS) method are described here.

For the measurement of a benzene standard 5 $\mu$l of a standard solution containing 100 $\mu$g/ml benzene in methanol were injected into a 20 ml HS vial and tightly closed with a PTFE cap. Each HS/GC/MS test sequence of sample measurements included the analysis of such a benzene standard. The benzene signal of the corresponding sequence was used for the calculation of the relative normalised area as described further below.

The samples were also analysed by HS/GC/MS in order to determine potential odorant and hazardous marker substances. Therefore, 2.000 $\pm$ 0.100 g samples were weighed in a 20 ml HS vial and tightly sealed with a PTFE cap. For each washing experiment a double determination of the respective sample was performed.

Applied headspace parameters for the analyses of standards and samples differed in the vial equilibration time and the HS oven temperature. Apart from that, method parameters were kept the same for standard and sample runs. The mass spectrometer was operated in scan mode and a total ion chromatogram (TIC) was recorded for each analysis. The detected substances were tentatively identified by the aid of deconvolution and a minimum match of 800 when the hit was subsequently compared to a mass spectral library. More detailed information on method parameters and data evaluation software is given below:
• HS parameter (Agilent G1888 Headspace Sampler)

| | |
|---|---|
| Vial equilibration time: | 5 min (benzene standard), 120 min (sample) |
| Oven temperature: | 200 °C (benzene standard), 100 °C (sample) |
| Loop temperature: | 205 °C |
| Transfer line temperature: | 210 °C |

Low shaking
• GC parameter (Agilent 7890A GC System)

Column:        ZB-WAX 7HG-G007-22 (30 m x 250 $\mu$m x 1 $\mu$m)
Carrier gas:   Helium 5.0
Flow:          2 ml/min
Split:         5:1
GC oven program:   35 °C for 0.1 min
               10 °C/min until 250 °C
               250 °C for 1 min

• MS parameter (Agilent 5975C inert XL MSD)

Acquisition mode:   Scan
Scan parameters:
    Low mass:   20
    High mass:  200
    Threshold:  10

• Software/Data evaluation

MSD ChemStation E.02.02.1431
MassHunter GC/MS Acquisition B.07.05.2479
AMDIS GC/MS Analysis Version 2.71
NIST Mass Spectral Library (Version 2011)
Microsoft Excel 2016

**Data evaluation**

The benzene standard was evaluated with the same parameters as the sample runs. Therefore, extracted ion chromatograms (EICs) of the measured benzene standards and samples were created. The peak areas required for the further data evaluation were obtained by integrating the corresponding substance peak of the EIC. The applied integration parameters and substance specific ions (m/z ratios) of all marker substances are listed in tables 1 and 2.

**Table 1:** Retention times and substance specific ions of selected marker substances.

| Substance | Retention time / min | Substance specific ion of the corresponding EIC (m/z) |
|---|---|---|
| Acetaldehyde | 1.7 | 44 |
| Benzene [1] | 3.9 | 78 |
| Toluene | 5.3 | 91 |
| Ethylbenzene | 6.6 | 106 |
| o-Xylene | 7.5 | 106 |
| D-Limonene | 7.6 | 136 |
| Styrene | 8.6 | 104 |
| Acetic acid* | 11.5 | 60 |
| Benzaldehyde | 12.5 | 106 |
| Acetophenone | 14.2 | 105 |
| Relevant for both, standards and samples. | | |

*In the HS-GC/MS analysis the acetic acid peak was not sufficiently separated from the peak corresponding to ethylhexanol. Therefore, the area of the acetic acid peak also includes the ethylhexanol impurity. This minor impurity has not been observed to have a significant influence on the values obtained in the data presented below. In general it is not possible to exclude the possibility of overlapping peaks in other regions of the HS-GC/MS readout.

Table 2: Integration parameters for the determination of the peak areas.

| Integration event | Value |
|---|---|
| Initial area reject | 1000 |
| Initial peak width | 0.005 |
| Shoulder detection | OFF |
| Initial threshold | 10.5 |

The substance specific ion peak areas ($Area(EIC)_X$) were normalised by the extracted ion peak area of benzene ($Area(EIC)_{Benzene}$) and the sample amount in order to obtain the normalised area ($norm.\ Area_X$, see equation 1).

$$norm.\ Area_X = \frac{Area(EIC)_X}{Area(EIC)_{Benzene} * sample\ amount\ [g]}$$

Equation 1

For each washing experiment the normalised mean area ($\overline{norm.\ Area_X}$) of the two individual analyses ($norm.\ Area_{X1}$ $norm.\ Area_{X2}$) was calculated by using the Excel function AVERAGE (see equation 2).

$$\overline{norm.\ Area_X} = AVERAGE(norm.\ Area_{X1} : norm.\ Area_{X2})$$

Equation 2

To obtain the relative normalised area ($rel.\ norm.\ Area_X$), the normalised mean area of the respective substance ($\overline{norm.\ Area_X}$) was divided by the normalised mean area of the reference sample ($norm.\ Area_R$) as stated in equation 3.

$$rel.\ norm.\ Area_X = \frac{\overline{norm.\ Area_X}}{\overline{norm.\ Area_R}}$$

Equation 3

For the data evaluation three different cases must be distinguished.

1) The substance specific ion peak was evaluable in both analysis runs of the double determination. The relative normalised area was obtained by applying equations 1, 2 and 3 as described below.
2) The substance specific ion peak was evaluable in only one analysis run of the double determination. Consequently, the normalised mean area ($\overline{norm.\ Area_X}$) is equal to the normalised area ($norm.\ Area_X$). Thus, the so obtained relative normalised area ( $rel.\ norm.\ Area_X$) was asterisked ("*") in the result table.
3) The substance specific ion peak was not evaluable in neither of the two analysis runs of the double determination. Therefore, the calculation of the relative normalised area ( $rel.\ norm.\ Area_X$) was not applicable ("n.a.") which was indicated in the result table.

In order to estimate the deviation of the two individual analyses of one corresponding washing experiment the relative standard deviation ($RSD_X$) was calculated (only applicable to case 1). Therefore, the standard deviation of the two normalised areas ($norm.\ Area_{X1}$, $norm.\ Area_{X2}$) was determined by using the Excel function STDEV.S. To calculate $RSD_X$ the standard deviation (STDEV.S) was divided by the normalised mean area ($\overline{norm.\ Area_X}$, see equation 4).

$$RSD_X = \frac{STDEV.S(norm.\ Area_{X1}:norm.\ Area_{X2})}{\overline{norm.\ Area_X}}$$

Equation 4

To refer the standard deviation to the *rel. norm. Area$_x$*, the $RSD_X$ was multiplied by the *rel. norm. Area$_X$* as described in equation 5.

$$rel.\ RSD_X = RSD_X * rel.\ norm.\ Area_X$$

Equation 5

**2. Experimental Results:**

In the following experiments, the materials used were as follows:

**Recycled polyolefin:**

The recycled polyolefin employed in the following experiments was obtained directed from mtm plastics GmbH, Niedegebra, Germany, and is a pre-sorted, unwashed polymer mixture used by mtm plastics GmbH in the preparation of Dipolen S. Consequently the composition of the recycled polyolefin with regard to the content of polyethylene and polypropylene is identical to that of Dipolen S; however the content of small molecule contaminants is likely to be different.

Dipolen S is a recycled polymer mixture comprising polyethylene and polypropylene obtained from mtm plastics GmbH, Niedergebra, Germany and has a polyethylene content of 40 wt% determined by DSC analysis. The melting points determined by DSC were 162 °C (PP) and 128 °C (PE).

In the following experiments, the recycled polyolefin was obtained in a flaked form; cryomilling was then undertaken prior to the below experiments in order to enable the experiments to be carried out on a smaller scale than would be the case for the industrial process.

**Sulfuric acid:**

Concentrated sulfuric acid (96%) was obtained from Sigma Aldrich Corporation. Sulfuric acid having a lower concentration was obtained by dilution with distilled water (addition of acid to water, NOT water to acid).

**Table 3. Lipophilicity and volatility of tested odorants**

| Contaminant | log P$_{octanot/water}$ | b.p. | Comment |
|---|---|---|---|
| D-limonene | 4.2 | 176 °C | Hydrophobic contaminant |
| Styrene | 2.3 | 145 °C | (Moderate) hydrophobic contaminant |
| Acetaldehyde | 0.45 | 20 °C | (Moderate) hydrophilic contaminant |
| Acetic acid | -0.54 | 118 °C | Hydrophilic contaminant and oxidation product |

**Table 4. Washing efficiency of water-, NaOH-, sulphuric acid- and sulphuric acid/NaOH wash in terms of the percentage of remaining contaminants (based on contaminants content before the treatment) after the treatment with the respective wash solvent.**

| | Wash solvent | Acetic acid | Acetaldehyde | Styrene | D-Limonene |
|---|---|---|---|---|---|
| 1 | H$_2$O wash, RT | 32% | 18% | 77% | 70% |
| 2 | NaOH (5%), RT | 3% | 7% | 55% | 69% |
| 3 | H$_2$SO$_4$ (50%), RT | 337% | 9% | 55% | 3%* |
| 4 | H$_2$SO$_4$ (95%, RT) | 79% | 2% | 12% | n.a. |

(continued)

|   | Wash solvent | Acetic acid | Acetaldehyde | Styrene | D-Limonene |
|---|---|---|---|---|---|
| 5 | $H_2SO_4$ (95%, RT), NaOH (5%, RT) | 33% | 1% | 20% | n.a. |

*The substance specific ion peak was evaluable in only one analysis run of the double determination.
n.a. - In the washed sample the substance specific ion peak was not evaluable in either of the two analysis runs of the double determination, i.e. the contaminant appears to be present in amounts below the detection limit.*

Example 1:

500 mL of demineralized water were added to 50 g of the cryo-milled rPO and the suspension was allowed to mix by means of an overhead stirrer for 2 hours at room temperature. The solution was then filtrated over a Büchner system and the rPO was recovered. 500 mL of fresh demineralized water was then added to the washed plastic and stirred for a couple of seconds. The plastic was filtrated once again. This step was repeated an additional two times. The rPO was then dried in a vacuum oven at 70 °C for 1 hour.

Example 2:

500 mL of a 5 % NaOH aqueous solution were added to 50 g of the cryo-milled rPO and the suspension was allowed to mix by means of an overhead stirrer for 2 hours at room temperature. The solution was then filtrated over a Büchner system and the rPO was recovered. 500 mL of fresh demineralized water was then added to the washed plastic and stirred for a couple of seconds. The plastic was filtrated once again. This step was repeated an additional time. The rPO was then dried in a vacuum oven at 70 °C for 1 hour.

Example 3:

500 mL of $H_2SO_4$ (50 %) were added to 50 g of cryo-milled rPO and the suspension was allowed to mix by means of an overhead stirrer for 2 hours at room temperature. After stirring, the mixture was added to 1 kg of ice in order to dilute the concentrated acid. The ice serves as control for the exothermic reaction taking place between $H_2SO_4$ and water. The solution was then filtrated over a Büchner system and the rPO is recovered. 500 mL of fresh demineralized water was then added to the washed plastic and stirred for a couple of seconds. The plastic was filtrated once again. This step was repeated an additional two times. The rPO was then dried in a vacuum oven at 70 °C for 1 hour.

Example 4:

500 mL of $H_2SO_4$ (95 %) were added to 50 g of cryo-milled rPO and the suspension was allowed to mix by means of an overhead stirrer for 2 hours at room temperature. After stirring, the mixture was added to 1 kg of ice in order to dilute the concentrated acid. The solution was then filtrated over a Büchner system and the rPO was recovered.
500 mL of fresh demineralized water was then added to the washed plastic flakes, directly followed by removal of the water from the slurry by filtration. This rinsing step was repeated an additional two times. The rPO was then dried in a vacuum oven at 70 °C for 1 hour.

Example 5:

500 mL of $H_2SO_4$ (95 %) were added to 50 g of cryo-milled rPO and the suspension was allowed to mix by means of an overhead stirrer for 2 hours at room temperature. After stirring, the mixture was added to 1 kg of ice in order to dilute the concentrated acid. The solution was then filtrated over a Büchner system and the rPO was recovered. 500 mL of fresh demineralized water was then added to the washed plastic flakes, directly followed by removal of the water from the slurry by filtration.
500 mL of a 5 % NaOH aqueous solution was then added to the washed plastic and stirred for 1 hour, followed by removal of the wash liquid by filtration. An additional rinsing step with 500 mL of fresh demineralized water was performed. The rPO was then dried in a vacuum oven at 70 °C for 1 hour.
As can be seen from Table 4, a simple pH-neutral aqueous wash is effective at removing hydrophilic contaminants such as acetic acid and acetaldehyde, however only a very limited removal of hydrophobic contaminants is observed (Example 1). Example 2 demonstrates that a caustic aqueous wash is similarly effective to the pH-neutral wash for most contaminants, however is superior in terms of acetic acid removal. Washing the recycled polyolefin with a relatively dilute acid (Example 3) has the effect of drastically reducing the amount of limonene present in the recycled polyolefin; however, the styrene removal efficiency is essentially no different to the caustic wash of example 2. Interestingly the mildly acidic wash appears to increase the content of acetic acid, possibly due to acid-catalyzed ester hydrolysis processes that form acetic acid.

Concentrated sulfuric acid has a dramatically improved effect on the content of all of the measured hydrophobic functional group-containing contaminants, thought to be due to the increased oxidizing ability of concentrated sulfuric acid, with the styrene content much lower than previously possible, although the amount of acetic acid is still quite high.

The process according to the present invention (i.e. Example 5), wherein a (potentially oxidizing) acid wash is combined with a caustic wash, is the only example to show good removal of all of the measured contaminants regardless of their logP values.

## Claims

1. A process for reducing the hydrophobic functional group-containing volatile organic compound content and hydrophilic volatile organic compound content of recycled polyolefin comprising, in the given order, the steps of:

   (a) treating recycled polyolefin, which contains hydrophobic functional group-containing volatile organic compounds and hydrophilic volatile organic compounds, with an aqueous solution A of an inorganic oxoacid, wherein said aqueous solution A has a pH-value of 2.0 or lower,
   (b) removing aqueous solution A of step (a) from the recycled polyolefin,
   (c) treating the recycled polyolefin of step (b) with an aqueous solution B having a pH-value of 7.0 or higher,
   (d) removing aqueous solution B of step (c) from the recycled polyolefin,
   (e) optionally drying, extruding and/or aerating the recycled polyolefin,
   thereby obtaining a recycled polyolefin with reduced content of hydrophobic functional group-containing volatile organic compounds and hydrophilic volatile organic compounds,
   wherein volatile organic compounds are defined as organic compounds having an initial boiling point (b.p.) of less than or equal to 250 °C when measured at a standard atmospheric pressure of 101.3 kPa,
   hydrophobic compounds are defined as those compounds having a logP (octanol/water) value of greater than 1.0, and
   hydrophilic compounds are defined as those compounds having a logP (octanol/water) value of lower than or equal to 1.0.

2. The process according to claim 1 wherein the recycled polyolefin of step (a) is in flaked form or pelletized form, preferably wherein the recycled polyolefin in flaked form or pelletized form is shredded prior to the treatment with aqueous solution A.

3. The process according to claim 1 or 2, wherein the treatment of the recycled polyolefin in step (a) with aqueous solution A lasts 5 minutes to 4 hours and step (a) is carried out at a temperature in the range from 10 to 45 °C.

4. The process according to any one of the preceding claims, wherein the treatment of the recycled polyolefin in step (c) with aqueous solution B lasts 5 minutes to 4 hours and step (c) is carried out at a temperature in the range from 20 to 90 °C.

5. The process according to any one of the preceding claims, wherein the inorganic oxoacid is selected from the group consisting of disulphuric acid, sulphuric acid, phosphoric acid, nitric acid, perchloric acid, and mixtures thereof, preferably sulphuric acid.

6. The process according to any one of the preceding claims, wherein the pKa of the inorganic oxoacid is in the range from -5.0 to 0.0, and/or wherein the amount of the inorganic oxoacid in aqueous solution A is in the range of 40 to 100 wt.-%.

7. The process according to any one of the preceding claims, wherein aqueous solution B of step (c) is a caustic aqueous solution comprising a base, preferably wherein the caustic aqueous solution comprising a base has a pH-value in the range of 9.0 to 14.0.

8. The process according to claim 7, wherein the amount of the base in the caustic aqueous solution is in the range

## EP 3 964 542 B1

of 0.5 to 10 wt.-%.

9. The process according to claim 7 or 8, wherein the base is selected from the group consisting of calcium hydroxide, potassium hydroxide, magnesium hydroxide, lithium hydroxide, sodium bicarbonate, sodium hydroxide and mixtures thereof, preferably sodium hydroxide.

10. The process according to any one of the preceding claims, wherein the combination of aqueous solution A and the recycled polyolefin in step (a) is subjected to agitation through mechanical mixing, ultrasonic treatment, mechanical grinding or pump around loop, and/or
wherein the combination of aqueous solution B and the recycled polyolefin in step (c) is subjected to agitation through mechanical mixing, ultrasonic treatment, mechanical grinding or pump around loop.

11. The process according to any one of the preceding claims, wherein the process comprises an additional step (b2) of rinsing residue of aqueous solution A and/or any other foreign material and/or degradation products thereof from the recycled polyolefin, which is carried out after step (b), and/or
wherein the process comprises an additional step (d2) of rinsing residue of aqueous solution B and/or any other foreign material and/or degradation products thereof from the recycled polyolefin, which is carried out after step (d).

12. The process according to any one of the preceding claims, wherein the recycled polyolefin originates from post-consumer waste, post industrial waste, or a combination thereof, preferably from post-consumer waste.

13. The process according to any one of the preceding claims, wherein the recycled polyolefin obtained as a product of the process has:

a limonene content, as measured by HS-GC/MS, of less than 30% of the value measured before the process, and/or
a styrene content, as measured by HS-GC/MS, of less than 30% of the value measured before the process, and/or
an acetic acid content, as measured by HS-GC/MS, of less than 40% of the value measured before the process, and/or
an acetaldehyde content, as measured by HS-GC/MS, of less than 20% of the value measured before the process.

14. A use of the process according to any one of the preceding claims for the reduction of the content of hydrophobic functional group-containing volatile organic compounds and hydrophilic volatile organic compounds, wherein the limonene content, as measured by HS-GC/MS, decreases to less than 30% of the value measured before the process, and/or
wherein the styrene content, as measured by HS-GC/MS, decreases to less than 30% of the value measured before the process.

15. The use according to claim 14, wherein the acetic acid content, as measured by HS-GC/MS, decreases to less than 40% of the value measured before the process, and/or wherein the acetaldehyde content, as measured by HS-GC/MS, decreases to less than 20% of the value measured before the process.

**Patentansprüche**

1. Verfahren zur Verringerung des Gehalts an hydrophoben, funktionelle Gruppen enthaltenden flüchtigen organischen Verbindungen und des Gehalts an hydrophilen flüchtigen organischen Verbindungen in recyceltem Polyolefin, umfassend in der angegebenen Reihenfolge die Schritte:

(a) Behandeln von recyceltem Polyolefin, das hydrophobe funktionelle Gruppen enthaltende flüchtige organische Verbindungen und hydrophile flüchtige organische Verbindungen enthält, mit einer wässrigen Lösung A einer anorganischen Oxosäure, wobei die wässrige Lösung A einen pH-Wert von 2,0 oder weniger aufweist,
(b) Entfernen der wässrigen Lösung A von Schritt (a) aus dem recycelten Polyolefin,
(c) Behandeln des recycelten Polyolefins von Schritt (b) mit einer wässrigen Lösung B, die einen pH-Wert von 7,0 oder höher aufweist,
(d) Entfernen der wässrigen Lösung B von Schritt (c) aus dem recycelten Polyolefin,
(e) gegebenenfalls Trocknen, Extrudieren und/oder Belüften des recycelten Polyolefins,

13

wodurch ein recyceltes Polyolefin mit verringertem Gehalt an hydrophoben funktionelle Gruppen enthaltenden flüchtigen organischen Verbindungen und hydrophilen flüchtigen organischen Verbindungen erhalten wird, wobei flüchtige organische Verbindungen definiert sind als organische Verbindungen mit einem Anfangssiedepunkt (Sdp.) von weniger als oder gleich 250°C, gemessen bei einem Standardatmosphärendruck von 101,3 kPa, hydrophobe Verbindungen als Verbindungen mit einem logP-Wert (Octanol/Wasser) von mehr als 1,0 definiert sind, und

hydrophile Verbindungen als Verbindungen mit einem logP-Wert (Octanol/Wasser) von kleiner als oder gleich 1,0 definiert sind.

2. Verfahren nach Anspruch 1, wobei das recycelte Polyolefin von Schritt (a) in flockenförmiger oder pelletierter Form vorliegt, wobei das recycelte Polyolefin in flockenförmiger oder pelletierter Form vor der Behandlung mit der wässrigen Lösung A vorzugsweise zerkleinert wird.

3. Verfahren nach Anspruch 1 oder 2, wobei die Behandlung des recycelten Polyolefins in Schritt (a) mit wässriger Lösung A 5 Minuten bis 4 Stunden dauert und Schritt (a) bei einer Temperatur im Bereich von 10 bis 45°C durchgeführt wird.

4. Verfahren nach einem der vorangehenden Ansprüche, wobei die Behandlung des recycelten Polyolefins in Schritt (c) mit wässriger Lösung B 5 Minuten bis 4 Stunden dauert und Schritt (c) bei einer Temperatur im Bereich von 20 bis 90°C durchgeführt wird.

5. Verfahren nach einem der vorangehenden Ansprüche, wobei die anorganische Oxosäure ausgewählt ist aus der Gruppe, bestehend aus Pyroschwefelsäure, Schwefelsäure, Phosphorsäure, Salpetersäure, Perchlorsäure und Gemischen davon, vorzugsweise Schwefelsäure.

6. Verfahren nach einem der vorangehenden Ansprüche, wobei der pKa-Wert der anorganischen Oxosäure im Bereich von -5,0 bis 0,0 liegt und/oder wobei die Menge der anorganischen Oxosäure in der wässrigen Lösung A im Bereich von 40 bis 100 Gew.-% liegt.

7. Verfahren nach einem der vorangehenden Ansprüche, wobei die wässrige Lösung B von Schritt (c) eine wässrige Lauge ist, die eine Base umfasst, vorzugsweise wobei die wässrige Lauge, die eine Base umfasst, einen pH-Wert im Bereich von 9,0 bis 14,0 aufweist.

8. Verfahren nach Anspruch 7, wobei die Menge der Base in der wässrigen Lauge im Bereich von 0,5 bis 10 Gew.-% liegt.

9. Verfahren nach Anspruch 7 oder 8, wobei die Base ausgewählt ist aus der Gruppe, bestehend aus Calciumhydroxid, Kaliumhydroxid, Magnesiumhydroxid, Lithiumhydroxid, Natriumbicarbonat, Natriumhydroxid und Gemischen davon, vorzugsweise Natriumhydroxid.

10. Verfahren nach einem der vorangehenden Ansprüche, wobei die Kombination aus wässriger Lösung A und dem recycelten Polyolefin in Schritt (a) durch mechanisches Mischen, Ultraschallbehandlung, mechanisches Mahlen oder Umpumpen bewegt wird, und/oder
wobei die Kombination aus wässriger Lösung B und dem recycelten Polyolefin in Schritt (c) einem Bewegen durch mechanisches Mischen, Ultraschallbehandlung, mechanisches Mahlen oder Umpumpen unterworfen wird.

11. Verfahren nach einem der vorangehenden Ansprüche, wobei das Verfahren einen zusätzlichen Schritt (b2) des Ausspülens von Rückständen der wässrigen Lösung A und/oder jeglichem anderen Fremdmaterial und/oder deren Abbauprodukten aus dem recycelten Polyolefin umfasst, der nach Schritt (b) durchgeführt wird, und/oder
wobei das Verfahren einen zusätzlichen Schritt (d2) des Ausspülens von Rückständen an wässriger Lösung B und/oder jeglichem anderen Fremdmaterial und/oder dessen Abbauprodukten aus dem recycelten Polyolefin, der nach Schritt (d) durchgeführt wird, umfasst.

12. Verfahren nach einem der vorangehenden Ansprüche, wobei das recycelte Polyolefin aus Post-Verbraucher-Abfall, Post-Industrie-Abfall oder einer Kombination davon, vorzugsweise aus Post-Verbraucher-Abfall, stammt.

13. Verfahren nach einem der vorangehenden Ansprüche, wobei das als Produkt des Verfahrens erhaltene recycelte Polyolefin aufweist:

einen Limonengehalt, gemessen mittels HS-GC/MS, von weniger als 30 % des vor dem Verfahren gemessenen Wertes und/oder

einen Styrolgehalt, gemessen durch HS-GC/MS, von weniger als 30 % des vor dem Verfahren gemessenen Wertes und/oder

einen Essigsäuregehalt, gemessen mit HS-GC/MS, von weniger als 40 % des vor dem Verfahren gemessenen Wertes, und/oder

einen Acetaldehydgehalt, gemessen durch HS-GC/MS, von weniger als 20 % des vor dem Verfahren gemessenen Wertes.

14. Verwendung des Verfahrens nach einem der vorangehenden Ansprüche zur Verringerung des Gehalts an hydrophoben, funktionelle Gruppen enthaltenden flüchtigen organischen Verbindungen und hydrophilen flüchtigen organischen Verbindungen, wobei der Limonengehalt, gemessen durch HS-GC/MS, auf weniger als 30 % des vor dem Verfahren gemessenen Werts abnimmt, und/oder wobei der Styrolgehalt, gemessen durch HS-GC/MS, auf weniger als 30 % des vor dem Verfahren gemessenen Wertes abnimmt.

15. Verwendung nach Anspruch 14, wobei der Essigsäuregehalt, gemessen durch HS-GC/MS, auf weniger als 40 % des vor dem Verfahren gemessenen Wertes abnimmt, und/oder wobei der Acetaldehydgehalt, gemessen durch HS-GC/MS, auf weniger als 20 % des vor dem Verfahren gemessenen Wertes abnimmt.

## Revendications

1. Procédé pour réduire la teneur en composés organiques volatils contenant des groupes fonctionnels hydrophobes et la teneur en composés organiques volatils hydrophiles d'une polyoléfine recyclée, comprenant, dans l'ordre indiqué, les étapes de :

(a) traitement d'une polyoléfine recyclée, qui contient des composés organiques volatils contenant des groupes fonctionnels hydrophobes et des composés organiques volatils hydrophiles, avec une solution aqueuse A d'un oxoacide inorganique, dans lequel ladite solution aqueuse A a une valeur de pH de 2,0 ou moins,
(b) retrait de la solution aqueuse A de l'étape (a) depuis la polyoléfine recyclée,
(c) traitement de la polyoléfine recyclée de l'étape (b) avec une solution aqueuse B ayant une valeur de pH de 7,0 ou plus,
(d) retrait de la solution aqueuse B de l'étape (c) depuis la polyoléfine recyclée,
(e) éventuellement séchage, extrusion et/ou aération de la polyoléfine recyclée,
ce qui donne ainsi une polyoléfine recyclée ayant une teneur réduite en composés organiques volatils contenant des groupes fonctionnels hydrophobes et composés organiques volatils hydrophiles,
dans lequel les composés organiques volatils sont définis comme des composés organiques ayant un point d'ébullition (p.e.) initial inférieur ou égal à 250°C quand il est mesuré sous une pression atmosphérique normalisée de 101,3 kPa,
les composés hydrophobes sont définis comme des composés ayant une valeur LogP (octanol/eau) supérieure à 1,0, et
les composés hydrophiles sont définis comme des composés ayant une valeur LogP (octanol/eau) inférieure ou égale à 1,0.

2. Procédé selon la revendication 1, dans lequel la polyoléfine recyclée de l'étape (a) est sous la forme de flocons ou sous la forme de granules, de préférence dans lequel la polyoléfine recyclée sous forme de flocons ou sous forme de granules est hachée avant le traitement avec la solution aqueuse A.

3. Procédé selon la revendication 1 ou 2, dans lequel le traitement de la polyoléfine recyclée dans l'étape (a) avec la solution aqueuse A dure 5 minutes à 4 heures et l'étape (a) est effectué à une température dans la plage de 10 à 45°C.

4. Procédé selon l'une quelconque des revendications précédentes, dans lequel le traitement de la polyoléfine recyclée dans l'étape (c) avec la solution aqueuse B dure 5 minutes à 4 heures et l'étape (c) est effectuée à une température dans la plage de 20 à 90°C.

5. Procédé selon l'une quelconque des revendications précédentes, dans lequel l'oxoacide inorganique est choisi dans le groupe constitué par l'acide disulfurique, l'acide sulfurique, l'acide phosphorique, l'acide nitrique, l'acide perchlorique, et leurs mélanges, de préférence l'acide sulfurique.

6. Procédé selon l'une quelconque des revendications précédentes, dans lequel le pKa de l'oxoacide inorganique est dans la plage de -5,0 à 0,0, et/ou dans lequel la quantité de l'oxoacide inorganique dans la solution aqueuse A est dans la plage de 40 à 100 % en poids.

7. Procédé selon l'une quelconque des revendications précédentes, dans lequel la solution aqueuse B de l'étape (c) est une solution aqueuse caustique comprenant une base, de préférence dans lequel la solution aqueuse caustique comprenant une base a une valeur de pH dans la plage de 9,0 à 14,0.

8. Procédé selon la revendication 7, dans lequel la quantité de la base dans la solution aqueuse caustique est dans la plage de 0,5 à 10 % en poids.

9. Procédé selon la revendication 7 ou 8, dans lequel la base est choisie dans le groupe constitué par l'hydroxyde de calcium, l'hydroxyde de potassium, l'hydroxyde de magnésium, l'hydroxyde de lithium, le bicarbonate de sodium, l'hydroxyde de sodium et leurs mélanges, de préférence l'hydroxyde de sodium.

10. Procédé selon l'une quelconque des revendications précédentes, dans lequel la combinaison de la solution aqueuse A et de la polyoléfine recyclée dans l'étape (a) est soumise à une agitation par mélange mécanique, traitement aux ultrasons, broyage mécanique ou boucle de pompage à recirculation, et/ou dans lequel la combinaison de la solution aqueuse B et de la polyoléfine recyclée dans l'étape (c) est soumise à une agitation par mélange mécanique, traitement aux ultrasons, broyage mécanique ou boucle de pompage à recirculation.

11. Procédé selon l'une quelconque des revendications précédentes, dans lequel le procédé comprend une étape additionnelle (b2) de rinçage du résidu de la solution aqueuse A et/ou de n'importe quel autre matériau étranger et/ou de leurs produits de dégradation depuis la polyoléfine recyclée, qui est effectuée après l'étape (b), et/ou dans lequel le procédé comprend une étape additionnelle (d2) de rinçage du résidu de la solution aqueuse B et/ou de n'importe quel autre matériau étranger et/ou de leurs produits de dégradation depuis la polyoléfine recyclée, qui est effectuée après l'étape (d).

12. Procédé selon l'une quelconque des revendications précédentes, dans lequel la polyoléfine recyclée provient de déchets de consommation, de déchets postindustriels, ou d'une de leurs combinaisons, de préférence de déchets de consommation.

13. Procédé selon l'une quelconque des revendications précédentes, dans lequel la polyoléfine recyclée obtenue sous la forme d'un produit du procédé a :

    une teneur en limonène, telle que mesurée par HS-GC/MS, inférieure à 30 % de la valeur mesurée avant le procédé, et/ou
    une teneur en styrène, telle que mesurée par HS-GC/MS, inférieure à 30 % de la valeur mesurée avant le procédé, et/ou
    une teneur en acide acétique, telle que mesurée par HS-GC/MS, inférieure à 40 % de la valeur mesurée avant le procédé, et/ou
    une teneur en acétaldéhyde, telle que mesurée par HS-GC/MS, inférieure à 20 % de la valeur mesurée avant le procédé.

14. Utilisation du procédé selon l'une quelconque des revendications précédentes pour la réduction de la teneur en composés organiques volatils contenant des groupes fonctionnels hydrophobes et la teneur en composés organiques volatils hydrophiles, dans laquelle la teneur en limonène, telle que mesurée par HS-GC/MS, diminue à moins de 30 % de la valeur mesurée avant le procédé, et/ou dans laquelle la teneur en styrène, telle que mesurée par HS-GC/MS, diminue à moins de 30 % de la valeur mesurée avant le procédé.

15. Utilisation selon la revendication 14, dans laquelle la teneur en acide acétique, telle que mesurée par HS-GC/MS, diminue à moins de 40 % de la valeur mesurée avant le procédé, et/ou dans laquelle la teneur en acétaldéhyde, telle que mesurée par HS-GC/MS, diminue à moins de 20 % de la valeur mesurée avant le procédé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0004601 A1
- EP 0859809 A1
- EP 0964877 A1
- EP 1542777 A2
- EP 3647328 A1
- JP S60231726 A
- WO 9716478 A